# FASCICULE DE BREVET EUROPEEN

(11) **EP 1 614 931 B1**
(45) Date de publication et mention de la délivrance du brevet: **17.08.2011**
(21) Numéro de dépôt: 05291452.0
(22) Date de dépôt: 05.07.2005
(51) Int. Cl.: F16F 13/26

(54) **Support antivibratoire hydraulique pilotable**
Hydraulisches, regelbares, dämpfendes Lager
Adjustable hydraulic antivibration support

(30) Priorité: 07.07.2004 FR 0407543
(43) Date de publication de la demande: 11.01.2006
(73) Titulaire: HUTCHINSON, 75008 Paris (FR)
(72) Inventeur: Bretaudeau, Jean-Pierre, 28200 Chateaudun (FR); Durand, Sylvain, 45190 Beaugency (FR); Gastineau, Jean-Luc, 41160 St Jean Froidmentel (FR); Petit, Pascal, 45190 Beaugency (FR)
(74) Mandataire: Bérogin, Francis

(56) Documents cités:
- EP-A- 0 852 304
- EP-A- 1 176 336
- US-A- 5 386 977
- US-A1- 2001 030 390

## Description

La présente invention est relative aux supports antivibratoires hydrauliques pilotables.

Plus particulièrement, l'invention concerne un support antivibratoire hydraulique pilotable destiné à être interposé aux fins d'amortissement entre des premier et deuxième éléments rigides, ce support antivibratoire comprenant :
- des première et deuxième armatures destinées à être fixées aux deux éléments rigides à réunir,
- un corps en élastomère qui relie entre elles les deux armatures et qui délimite au moins partiellement une chambre de travail remplie de liquide,
- une chambre auxiliaire, elle-même remplie de liquide, communiquant avec la chambre de travail par l'intermédiaire d'un premier passage étranglé,
- une chambre pneumatique séparée de la chambre auxiliaire par une paroi mobile,
- et un dispositif de mise à l'air à commande électrique, actionnable électriquement pour faire communiquer la chambre pneumatique avec l'atmosphère, la chambre pneumatique étant reliée à l'atmosphère par l'intermédiaire d'un clapet comportant un organe de clapet sollicité élastiquement contre un siège de clapet, ledit clapet autorisant normalement uniquement la sortie d'air depuis la chambre pneumatique vers l'atmosphère et non l'inverse.

Le document US-5 386 977 décrit un support antivibratoire de ce type.

La présente invention a notamment pour objet de perfectionner les supports antivibratoires du type susmentionné, pour en améliorer l'efficacité.

A cet effet, selon l'invention, un support antivibratoire du genre en question est caractérisé en ce que ladite chambre pneumatique est formée dans un godet ayant une paroi externe rigide qui présente une surface intérieure, ladite chambre pneumatique étant délimitée d'une part, par ladite paroi mobile, et d'autre part, par ladite paroi externe rigide, ladite paroi mobile étant adaptée pour venir se plaquer sensiblement contre la surface intérieure de ladite paroi externe rigide, en ce que le siège de clapet est formé dans ladite paroi externe rigide du godet au voisinage de la surface intérieure de ladite paroi externe,
et en ce qu'entre le siège de clapet et la surface intérieure de la chambre pneumatique, est défini un volume mort inférieur à 0,3 cm³.

Grâce à ces dispositions, le support antivibratoire selon l'invention présente d'excellentes performances en fonctionnement.

Dans divers modes de réalisation du support antivibratoire selon l'invention, on peut éventuellement avoir recours en outre à l'une et/ou à l'autre des dispositions suivantes :
- le clapet comporte un organe de clapet sollicité élastiquement contre un siège de clapet, et le dispositif de mise à l'air comporte un actionneur électrique adapté pour écarter l'organe de clapet par rapport au siège de clapet ;
- l'actionneur électrique est adapté pour générer un champ magnétique par induction, et l'organe de clapet comporte une partie métallique adaptée pour être déplacée sous l'effet dudit champ magnétique ;
- l'actionneur électrique comporte un solénoïde entourant un passage central et l'organe de clapet comporte un noyau métallique monté coulissant dans ledit passage central ;
- le dispositif de mise à l'air libre comporte une électrovanne adaptée pour sélectivement ouvrir ou

fermer un passage de mise à l'air libre indépendamment du clapet ;
- la paroi mobile est une membrane en élastomère ;
- le support antivibratoire comporte en outre une chambre de compensation remplie de liquide, qui communique avec la chambre de travail par l'intermédiaire d'un deuxième passage étranglé ;
- la chambre de compensation est séparée de la chambre de travail par une cloison rigide dotée d'un clapet de découplage qui présente deux faces communiquant respectivement avec la chambre de travail avec la chambre de compensation, ce clapet de découplage étant adapté pour vibrer avec un débattement limité entre lesdites chambres de travail et de compensation ;
- le premier passage étranglé présente une fréquence de résonance comprise entre 20 et 80 Hz.

D'autres caractéristiques et avantages de l'invention apparaîtront au cours de la description suivante de deux de ses formes de réalisation, données à titre d'exemples non limitatifs, en regard des dessins joints.

Sur les dessins :
- la figure 1 est une vue en coupe axiale d'un support antivibratoire selon une première forme de réalisation de l'invention,
- et la figure 2 est une vue en coupe axiale d'un support antivibratoire selon une deuxième forme de réalisation de l'invention.

Sur les différentes figures, les mêmes références désignent des éléments identiques ou similaires.

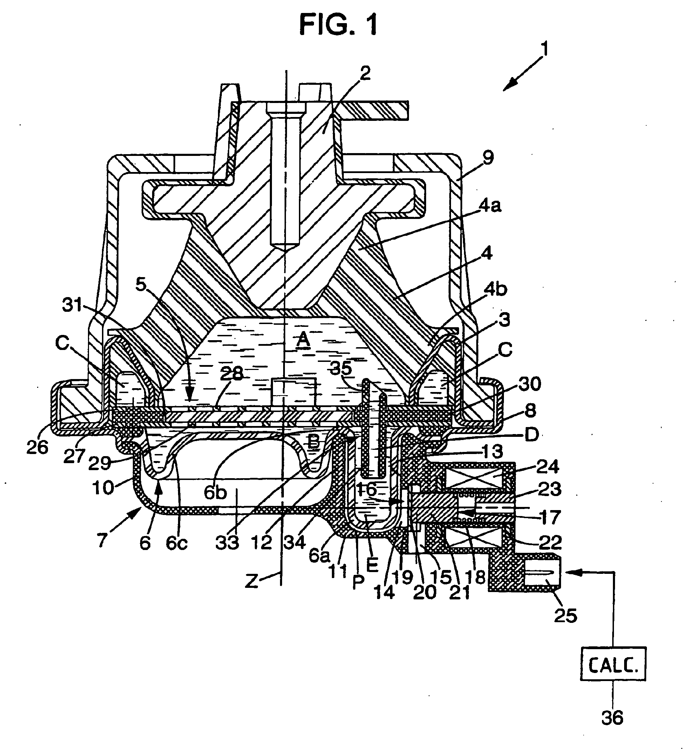

La figure 1 représente un support antivibratoire hydraulique pilotable 1, comportant :
- une première armature rigide 2 présentant par exemple la forme d'une embase métallique et destinée par exemple à être fixée au moteur d'un véhicule,
- une deuxième armature rigide 3, par exemple une armature annulaire en tôle pliée et découpée, qui est destinée à être fixée par exemple à la caisse du véhicule,
- un corps en élastomère 4 capable de supporter notamment les efforts statiques dus au poids du moteur du véhicule et reliant les première et deuxième armatures 2, 3, ce corps en élastomère pouvant présenter par exemple une forme de cloche qui s'étend axialement selon un axe par exemple vertical Z, entre un sommet 4a adhérisé et surmoulé sur la première armature 2 et une base annulaire 4b surmoulée et adhérisée sur la deuxième armature 3,
- une cloison rigide 5 solidarisée avec la deuxième armature 3 et appliquée de façon étanche contre la base 4b du corps en élastomère, en délimitant avec celui-ci une chambre hydraulique de travail A remplie de liquide,
- une membrane souple en élastomère 6 appliquée de façon étanche contre la cloison 5 à l'opposé de la chambre de travail A, en délimitant avec ladite cloison 5 une chambre hydraulique de compensation B qui communique avec la chambre de travail A par un passage étranglé C.

Le support antivibratoire 1 comporte en outre une chambre hydraulique auxiliaire E qui communique avec la chambre de travail A par un autre passage étranglé D. Cette chambre hydraulique auxiliaire E est séparée d'une chambre pneumatique P par une paroi mobile qui peut présenter toutes formes connues (notamment piston, membrane souple ou autres) mais, qui dans l'exemple considéré ici, est formée par une poche 6a de la membrane 6 susmentionnée.

Dans l'exemple représenté sur la figure 1, le support antivibratoire hydraulique comporte un couvercle 7, réalisé par exemple en matière plastique moulée, qui recouvre la membrane 6 vers le bas. Ce couvercle peut être fixé à la périphérie extérieure de la membrane 6 par tout moyen connu, et ledit couvercle est appliqué contre la cloison 5 à l'opposé du corps en élastomère 4, par exemple au moyen d'une couronne métallique sertie 8 fixée à ladite deuxième armature. La couronne 8 peut également être sertie sur un capot limiteur 9 adapté pour limiter les débattements de la première armature 2 par rapport à la deuxième armature 3.

Le couvercle 7 peut former intérieurement deux godets 10, 11 ouverts vers la cloison 5, qui appliquent la membrane 6 en contact étanche contre ladite cloison 5. En particulier, la paroi 12 du godet 11 applique la membrane 6 contre la cloison 5 selon une ligne 6b séparant la membrane 6 en :
- d'une part, la poche 6a susmentionnée de la membrane qui délimite la chambre auxiliaire E,
- et d'autre part, une poche 6c de la membrane qui délimite la chambre de compensation B.

La chambre pneumatique P est délimitée intérieurement, outre la poche 6a de la membrane, par une surface intérieure 13 de la paroi 12 du godet 11, et ladite chambre pneumatique communique avec l'atmosphère par l'intermédiaire d'un alésage 14 percé dans ladite paroi 12 du godet 11. Cet alésage peut communiquer par exemple avec un passage de mise à l'air libre 15 ménagé dans le couvercle 7.

L'alésage 14 communique avec le passage de mise à l'air libre 15 par l'intermédiaire d'un clapet 16 qui est adapté pour, en fonctionnement normal (c'est-à-dire hors état d'ouverture forcée), autoriser uniquement la sortie d'air depuis la chambre pneumatique P vers l'atmosphère et non l'inverse. Le clapet 16 peut comporter un organe de clapet 17 qui est sollicité élastiquement par un ressort 18 de façon à être appliqué contre un siège de clapet 19. Dans l'exemple considéré ici, le siège de clapet 19 est formé dans la paroi du godet 11, au voisinage de la surface intérieure 13 de ce godet, et ledit siège de clapet est formé par un épaulement qui entoure l'alésage 14 et qui est orienté à l'opposé de la chambre pneumatique P. Le volume mort défini à l'intérieur de l'alésage 14 entre la surface intérieure 13 et le siège de clapet 19, est ainsi réduit au maximum. Ce volume mort est avantageusement compris entre 0 et 0,3 cm³.

L'organe de clapet 17 peut être constitué par exemple :
- d'une partie frontale 20, en matière plastique ou autre, adapté pour s'appliquer avec étanchéité contre le siège de clapet 19,
- et d'un noyau métallique 21, de préférence en matériau ferromagnétique.

Le noyau 21 est monté coulissant dans un canal 22 ménagé dans le couvercle 7, ce canal 22 accueillant le ressort 18 et étant partiellement fermé vers l'extérieur, par une butée 23 métallique ou autre sur laquelle prend appui le ressort 18. Autour du canal 22, un solénoïde 24 peut être noyé dans la matière plastique du couvercle 7. Ce solénoïde 24 peut être alimenté électriquement par des moyens de commande externes appartenant au véhicule, tels que le calculateur de bord 36 (CALC.), par l'intermédiaire d'un connecteur 25. Lorsqu'un courant électrique parcourt le solénoïde 24, celui-ci produit un champ magnétique qui déplace le noyau métallique 21 de l'organe de clapet 17 en l'écartant du siège de clapet 19, ce qui met la chambre pneumatique P en communication avec l'atmosphère.

Par ailleurs, dans l'exemple représenté sur la figure 1, la cloison rigide 5 se présente sous la forme d'une plaque composite comprenant :
- deux plaques de tôle ajourées 26, 27 comprenant respectivement des grilles 28, 29 communiquant l'une avec la chambre de travail A et l'autre avec la chambre de compensation B,
- une plaque intercalaire 30 interposée entre les plaques de tôle 26, 27 et réalisée par exemple en matière plastique, cette plaque intercalaire présentant un évidement 31 dans lequel est logé un clapet de découplage 32 formé par une membrane souple en élastomère, et ladite plaque intercalaire 30 comportant en outre un tube 33, pouvant être par exemple formé d'une seule pièce avec la plaque 31 et délimitant le passage étranglé D susmentionné.

Le tube 33 comporte une partie principale 34 qui s'étend à l'intérieur de la chambre auxiliaire E au sein du godet 11, et, le cas échéant, un court tronçon 35 s'étendant à l'intérieur de la chambre de travail A.

Le dispositif qui vient d'être décrit fonctionne comme suit.

Lorsque le moteur du véhicule fonctionne au ralenti, le calculateur 36 du véhicule alimente le solénoïde 24 et force ainsi l'ouverture du clapet 16, de sorte que la chambre pneumatique P communique avec l'atmosphère, ce qui permet à la poche 6a de la membrane 6 de se déplacer librement à l'intérieur du godet 11 : dans ce mode de fonctionnement, les vibrations du moteur sont transmises à la chambre de travail A par le corps en élastomère 4, ce qui provoque des fluctuations du volume de ladite chambre de travail. Ces fluctuations sont absorbées pour partie par le clapet de découplage 32 et pour partie par les déformations de la chambre hydraulique auxiliaire E. Compte tenu de la fréquence de résonance du passage étranglé D (par exemple comprise entre 20 et 80 Hz), qui correspond sensiblement à la fréquence des vibrations émises par le moteur au ralenti, ledit passage étranglé D est alors le siège de phénomènes de résonance qui permettent de filtrer efficacement les vibrations du moteur.

Dans certaines conditions prédéterminées, par exemple pendant le roulage du véhicule (c'est-à-dire notamment lorsque le régime moteur est supérieur à une certaine limite prédéterminée), le calculateur 36 cesse d'alimenter le solénoïde 24, de sorte que le clapet 16 revient en position de fermeture sous l'action du ressort 18. Dans ce mode de fonctionnement, les déplacements vibratoires du moteur, de relativement grande amplitude, se traduisent par des variations de volume de relativement grande amplitude de la chambre de travail A, qui entraînent des déformations de la chambre de compensation B, de sorte que le passage étranglé C, dont la fréquence de résonance est avantageusement comprise entre 5 et 20 HZ, est alors le siège de phénomènes de résonance permettant un bon amortissement des vibrations.

De plus, au début de l'établissement de ce mode de fonctionnement, la chambre pneumatique P contient encore de l'air, de sorte que la poche 6a de la membrane 6 peut se déplacer, mais ces mouvements chassent l'air de la chambre pneumatique P au travers du clapet 16. Lorsque quasiment tout l'air contenu dans la chambre P a été chassé, la poche 6a de la membrane 6 reste sensiblement plaquée contre la paroi intérieure 13 du godet 11, comme représenté sur la figure 1, et la chambre hydraulique auxiliaire E est désactivée, puisque cette chambre a alors un volume constant, de sorte qu'aucun fluide ne traverse le passage étranglé D.

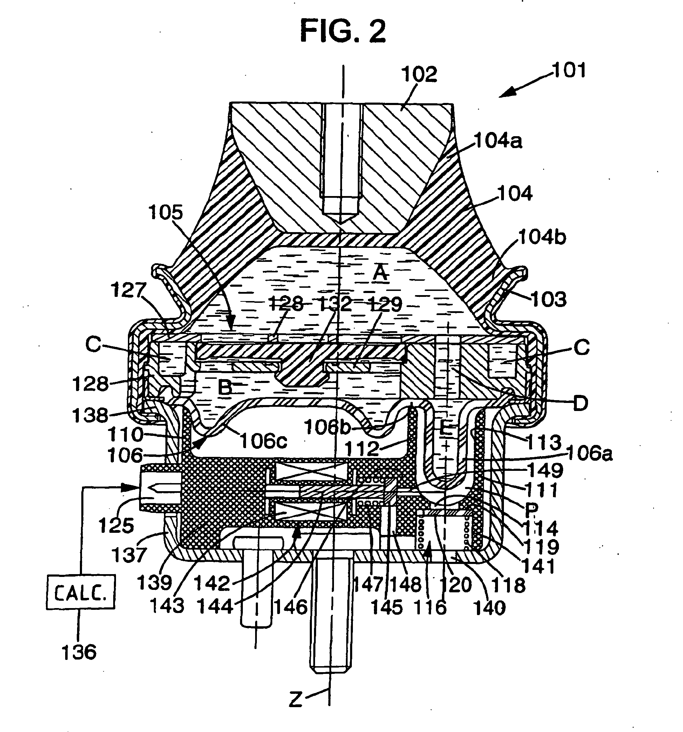

Dans la deuxième forme de réalisation de l'invention, visible sur la figure 2, le support antivibratoire hydraulique pilotable 101 comporte à nouveau :
- une première armature rigide 102 présentant par exemple la forme d'une embase métallique et destinée notamment à être fixée au moteur d'un véhicule,
- une deuxième armature rigide 103, par exemple une armature annulaire en tôle pliée et découpée, qui est destinée à être fixée notamment à la caisse du véhicule,
- un corps en élastomère 104 capable de supporter notamment les efforts statiques dus au poids du moteur du véhicule et reliant les première et deuxième armatures 102, 103, ce corps en élastomère pouvant présenter une forme de cloche qui s'étend axialement selon un axe Z par exemple vertical, entre un sommet 104a adhérisé et surmoulé sur la première armature 102 et une base annulaire 104b adhérisée et surmoulée sur la deuxième armature 103,
- une cloison rigide 105 solidarisée avec la deuxième armature 103 et appliquée de façon étanche contre la base 104b du corps en élastomère, en délimitant avec celle-ci une chambre hydraulique de travail A remplie de liquide,
- une membrane souple en élastomère 106 appliquée de façon étanche contre la cloison rigide 105 à l'opposé de la chambre de travail A, en délimitant avec ladite cloison 105 une chambre hydraulique de compensation B qui communique avec la chambre de travail A par un passage étranglé C pouvant présenter par exemple une fréquence de résonance comprise entre 5 et 20 Hz.

La cloison 105 peut éventuellement comporter une plaque de tôle 127 recouvrant une coque 128 pouvant être par exemple moulée en alliage léger, coque dans laquelle sont délimités les passages étranglés C, D. La plaque 127 et la coque 128 peuvent comporter respectivement des grilles 129, 130 en regard de la chambre de travail et de la chambre de compensation, et entre ces grilles peut être disposé un clapet de découplage 132 formé par une membrane en élastomère.

Le support antivibratoire 101 comporte en outre une chambre hydraulique auxiliaire E qui communique avec la chambre de travail A par un autre passage étranglé D ménagé dans la cloison 105, ledit passage étranglé D pouvant présenter par exemple une fréquence de résonance comprise entre 20 et 80 Hz. La chambre auxiliaire E est séparée d'une chambre pneumatique P par une paroi mobile qui peut présenter toute forme connue (notamment piston, membrane souple ou autre) mais qui, dans l'exemple considéré ici, est formé par une poche 106a de la membrane 106 susmentionnée.

Dans l'exemple représenté sur la figure 2, le support antivibratoire 101 comporte en outre un couvercle 137 métallique qui recouvre la membrane 106 vers le bas et qui est appliqué contre la cloison rigide 105 à l'opposé de la chambre de travail A par sertissage d'une partie de la deuxième armature 103. La périphérie de la membrane 106 peut être serrée axialement entre la cloison 105 et un rebord périphérique 138 du couvercle 137.

De plus, un bloc de support 139, réalisé par exemple en matière plastique moulée, peut être disposé à l'intérieur du couvercle 137. Ce bloc de support 139 forme deux godets 110, 111 ouverts vers la cloison 105 et appliquant localement la membrane 106 en contact étanche contre ladite cloison 105 de façon à délimiter la poche 106a et une poche 106c de ladite membrane 106 en correspondance avec la chambre de compensation B. Ces poches 106a, 106c sont séparées l'une de l'autre par une ligne de contact 106b où ladite membrane 106 est appliquée en contact étanche contre la cloison 105 par la paroi 112 du godet 111. La paroi 112 du godet 111 comporte une surface intérieure 113 qui délimite la chambre pneumatique P susmentionnée avec ladite poche 106a.

De plus, la paroi du godet 111 est percée d'un alésage 114 qui communique avec l'atmosphère par l'intermédiaire d'un orifice 140 du couvercle 137, au travers d'un clapet 116 qui est adapté pour permettre uniquement la sortie d'air depuis la chambre pneumatique P vers l'atmosphère et non l'inverse.

Dans l'exemple représenté sur la figure 2, l'alésage 114 débouche dans une chambre 141 de diamètre supérieur qui délimite un épaulement formant un siège de clapet 119 autour dudit alésage 114. Dans la chambre 141 est disposé un organe de clapet 120 qui est sollicité élastiquement contre le siège de clapet 119 par un ressort 118.

Par ailleurs, le bloc de support 139 comporte également une électrovanne 142 qui peut présenter par exemple :
- un solénoïde 143 relié à un connecteur 125 lui-même relié à un dispositif de commande électronique tel que le calculateur de bord 136 (CALC.) du véhicule ,
- un noyau métallique en matière ferromagnétique 144 monté coulissant dans un canal libre au centre du solénoïde 143,
- un organe de fermeture 145 solidaire du noyau 144 et sollicité élastiquement contre un siège de vanne 146 par un ressort 147.

L'organe de fermeture 147 est adapté pour fermer un passage de mise à l'air libre 148 qui fait communiquer un alésage latéral 149 débouchant dans la chambre pneumatique P, avec la chambre 141 susmentionnée. Le volume mort, délimité à l'intérieur de l'alésage latéral 149 entre le siège de clapet 119 et la surface intérieure 113 du godet 111, est avantageusement compris entre 0 et 0,3 cm³.

Dans le deuxième mode de réalisation de l'invention, le fonctionnement du support antivibratoire 101 est sensiblement le même que celui du support antivibratoire 1 de la figure 1, si ce n'est que la mise à l'air libre de la chambre pneumatique P s'effectue indépendamment du clapet 116, au moyen de l'électrovanne 142. On notera toutefois que, dans ce mode de réalisation, le ressort 147 de l'électrovanne 142 peut le cas échéant être taré pour que l'électrovanne 142 fonctionne elle-même comme un clapet lorsque le solénoïde 143 n'est pas alimenté électriquement, comme déjà décrit précédemment en regard de la figure 1.

## Revendications

1. Support antivibratoire hydraulique pilotable destiné à être interposé aux fins d'amortissement entre des premier et deuxième éléments rigides, ce support antivibratoire comprenant :
- des première et deuxième armatures (2, 3 ; 102, 103) destinées à être fixées aux deux éléments rigides à réunir,
- un corps en élastomère (4 ; 104) qui relie entre elles les deux armatures (2, 3 ; 102, 103) et qui délimite au moins partiellement une chambre de travail (A) remplie de liquide,
- une chambre auxiliaire (E), elle-même remplie de liquide, communiquant avec la chambre de travail (A) par l'intermédiaire d'un premier passage étranglé (D),
- une chambre pneumatique (P) séparée de la chambre auxiliaire par une paroi mobile (6a ; 106a), la chambre pneumatique (P) étant reliée à l'atmosphère par l'intermédiaire d'un clapet (16 ; 116) comportant un organe de clapet (17 ; 117) sollicité élastiquement contre un siège (19;119) de clapet, ledit clapet autorisant normalement uniquement la sortie d'air depuis la chambre pneumatique (P) vers l'atmosphère et non l'inverse,
- et un dispositif de mise à l'air (24 ; 142) à commande électrique, actionnable électriquement pour faire communiquer la chambre pneumatique (P) avec l'atmosphère, **caractérisé en ce que** ladite chambre pneumatique (P) est formée dans un godet (11 ; 111) ayant une paroi externe rigide (12 ; 112) qui présente une surface intérieure (13 ; 113), ladite chambre pneumatique (P) étant délimitée d'une part, par ladite paroi mobile (6a ; 106a), et d'autre part, par ladite paroi externe rigide (12 ; 112), ladite paroi mobile (6a ; 106a) étant adaptée pour venir se plaquer sensiblement contre la surface intérieure (13 ; 113) de ladite paroi externe rigide,
**en ce que** le siège (19 ; 119) de clapet est formé dans ladite paroi externe rigide (12 ; 112) du godet (11 ; 111) au voisinage de la surface intérieure (13 ; 113) de ladite paroi externe,
et **en ce qu'**entre le siège de clapet (19 ; 119) et la surface intérieure (13 ; 113) de la chambre pneumatique, est défini un volume mort inférieur à 0,3 cm³.

2. Support antivibratoire selon la revendication 1, dans lequel le clapet (16) comporte un organe de clapet (17) sollicité élastiquement contre un siège de clapet (19), et le dispositif de mise à l'air comporte un actionneur électrique (24) adapté pour écarter l'organe de clapet (17) par rapport au siège de clapet (19).

3. Support antivibratoire selon la revendication 2, dans lequel l'actionneur électrique (24) est adapté pour générer un champ magnétique par induction, et l'organe de clapet (17) comporte une partie métallique (21) adaptée pour être déplacée sous l'effet dudit champ magnétique.

4. Support antivibratoire selon la revendication 3, dans lequel l'actionneur électrique comporte un solénoïde (24) entourant un passage central (22) et l'organe de clapet (17) comporte un noyau métallique (21) monté coulissant dans ledit passage central (22).

5. Support antivibratoire selon la revendication 1, dans lequel le dispositif de mise à l'air libre comporte une électrovanne (142) adaptée pour sélectivement ouvrir ou fermer un passage de mise à l'air libre (148) indépendamment du clapet (116).

6. Support antivibratoire selon l'une quelconque des revendications précédentes, dans lequel la paroi mobile (6a ; 106a) est une membrane en élastomère.

7. Support antivibratoire selon l'une quelconque des revendications précédentes, dans lequel le support
antivibratoire comporte en outre une chambre de compensation (B) remplie de liquide, qui communique avec la chambre de travail (A) par l'intermédiaire d'un deuxième passage étranglé (C).

8. Support antivibratoire selon la revendication 7, dans lequel la chambre de compensation (B) est séparée de la chambre de travail (A) par une cloison rigide (5 ; 105) dotée d'un clapet de découplage (32 ; 132) qui présente deux faces communiquant respectivement avec la chambre de travail (A) avec la chambre de compensation (B), ce clapet de découplage étant adapté pour vibrer avec un débattement limité entre lesdites chambres de travail et de compensation.

9. Support antivibratoire selon l'une quelconque des revendications précédentes, dans lequel le premier passage étranglé (D) présente une fréquence de résonance comprise entre 20 et 80 Hz.

## Claims

1. Controllable hydraulic vibration-damping support designed to be interposed for vibration-damping purposes between first and second rigid elements, said vibration-damping support comprising:
- first and second strength members (2, 3; 102, 103) serving to be fastened to the two rigid elements to be connected together,
- an elastomer body (4; 104) which connects the two strength members (2, 3; 102, 103) together and which defines, at least in part, a working chamber (A) filled with liquid,
- an auxiliary chamber (E) itself filled with liquid, communicating with the working chamber (A) via a first constricted passageway (D),
- a pneumatic chamber (P) separated from the auxiliary chamber by a moving wall (6a;106a), the pneumatic chamber (P) being connected to the atmosphere by means of a check valve (16; 116) comprising a valve member (17;117) that is resiliently urged against a valve seat (19; 119), said check valve (16; 116) normally allowing air to flow only out from the pneumatic chamber (P) towards the atmosphere and not in the opposite direction;
- and an electrically controlled vent device (24; 142) for establishing a connection to the air, which device can be actuated electrically in order to put the pneumatic chamber (P) into communication with the atmosphere,
**characterized in that** said pneumatic chamber (P) is formed in a cup (11;111) having a rigid outside wall (12; 112) which has an inside surface (13; 113), said pneumatic chamber (P) being defined firstly by said moving wall (6a; 106a) and secondly by said rigid outside wall (12; 112), said moving wall (6a; 106a) being adapted to come to bear substantially on the inside surface (13; 113) of said rigid outside wall,
**in that** valve seat (19; 119) is formed in said rigid outside wall (12; 112) of the cup (11;111) in the vicinity of the inside surface (13; 113) of said outside wall,
and **in that**, between the valve seat (19; 119) and the inside surface (13; 113) of the pneumatic chamber, there is defined a dead volume of less than 0.3 cm³.

2. A vibration-damping support according to claim 1, in which the check valve (16) comprises a valve member (17) resiliently urged against a valve seat (19), and the vent device comprises an electrical actuator (24) suitable for moving the valve member (17) away from the valve seat (19).

3. A vibration-damping support according to claim 2, in which the electrical actuator (24) is adapted to generate a magnetic field by induction, and the valve member (17) includes a metal portion (21) adapted to be moved under the effect of said magnetic field.

4. A vibration-damping support according to claim 3, in which the electrical actuator comprises a solenoid (24) surrounding a central passageway (22), and the valve member (17) includes a metal core (21) mounted to slide in said central passageway (22).

5. A vibration-damping support according to claim 1, in which the vent device comprises a solenoid valve (142) adapted for selectively opening or closing a passageway (148) to the surrounding air independently of the valve member (116).

6. A vibration-damping support according to any preceding claim, in which the moving wall (6a; 106a) is an elastomer diaphragm.

7. A vibration-damping support according to any preceding claim, in which the vibration-damping support further comprises a compensation chamber (B) filled with liquid, which chamber communicates with the working chamber (A) via a second constricted passageway (C).

8. A vibration-damping support according to claim 7, in which the compensation chamber (B) is separated from the working chamber (A) by a rigid partition (5; 105) provided with a decoupling valve (32; 132) which has two faces communicating respectively with the working chamber (A) and with the compensation chamber (B), said decoupling valve being adapted to vibrate with limited amplitude between said working chamber and said compensation chamber.

9. A vibration-damping support according to any preceding claim, in which the first constricted passageway (D) has a resonant frequency comprised in the range 20 Hz to 80 Hz.

## Patentansprüche

1. Steuerbarer hydraulischer Dämpfungssupport, der dazu bestimmt ist, zur Dämpfung zwischen einem ersten und einem zweiten starren Element angeordnet zu werden, wobei dieser Dämpfungssupport Folgendes umfasst:
- ein erstes und ein zweites Verstärkungselement (2, 3; 102, 103), die dafür bestimmt sind, an den beiden zu verbindenden starren Elementen befestigt zu werden,
- einen Körper aus einem Elastomer (4; 104), der die beiden Verstärkungselemente (2, 3; 102, 103) miteinander verbindet und der zumindest teilweise einen Arbeitsraum (A) begrenzt, der mit einer Flüssigkeit gefüllt ist,
- eine zusätzliche Kammer (E), die selbst mit einer Flüssigkeit gefüllt ist und über einen ersten engen Durchgang (D) mit dem Arbeitsraum (A) in Verbindung steht,
- eine pneumatische Kammer (P), die von der zusätzlichen Kammer durch eine bewegliche Wand (6a; 106a) getrennt ist, wobei die pneumatische Kammer (P) über ein Ventil (16; 116) mit der Außenluft verbunden ist, das ein Ventilelement (17; 117) aufweist, das elastisch einen Ventilsitz (19; 119) beansprucht, wobei das Ventil Luft normalerweise ausschließlich aus der pneumatischen Kammer (P) in die Umgebung gelangen lässt und nicht umgekehrt,
- sowie eine elektrisch gesteuerte Lüftungsvorrichtung (24; 142), die elektrisch betätigt werden kann, um die pneumatische Kammer (P) mit der Außenluft in Verbindung zu bringen,
**dadurch gekennzeichnet, dass** die pneumatische Kammer (P) in einem becherförmigen Element (11; 111) ausgebildet ist, das eine starre Außenwand (12; 112) aufweist, die eine Innenseite (13; 113) aufweist, wobei die pneumatische Kammer (P) einerseits von der beweglichen Wand (6a; 106a) und andererseits von der starren Außenwand (12; 112) begrenzt wird, wobei die bewegliche Wand (6a; 106a) dafür eingerichtet ist, sich im Wesentlichen an die Innenseite (13; 113) der starren Außenwand zu legen,
**dadurch**, dass der Ventilsitz (19; 119) in der starren Außenwand (12; 112) des becherförmigen Elements (11; 111) in der Nähe der Innenseite (13; 113) der Außenwand ausgebildet ist,
und **dadurch**, dass zwischen dem Ventilsitz (19; 119) und der Innenseite (13; 113) der pneumatischen Kammer ein Totraum von weniger als 0,3 cm³ definiert ist.

2. Dämpfungssupport nach Anspruch 1, wobei das Ventil (16) ein Ventilelement (17) aufweist, das elastisch einen Ventilsitz (19) beansprucht, und die Lüftungsvorrichtung ein elektrisches Stellglied (24) aufweist, das dafür eingerichtet ist, das Ventilelement (17) vom Ventilsitz (19) weg zu bewegen.

3. Dämpfungssupport nach Anspruch 2, wobei das elektrische Stellglied (24) dafür eingerichtet ist, durch Induktion ein Magnetfeld zu erzeugen und das Ventilelement (17) ein Metallteil (21) aufweist, das dafür eingerichtet ist, unter dem Einfluss des Magnetfelds bewegt zu werden.

4. Dämpfungssupport nach Anspruch 3, wobei das elektrische Stellglied einen Magneten (24) aufweist, der einen zentralen Durchgang (22) umgibt, und das Ventilelement (17) einen Metallkern (21) aufweist, der verschiebbar in dem zentralen Durchgang (22) montiert ist.

5. Dämpfungssupport nach Anspruch 1, wobei die Lüftungsvorrichtung ein Magnetventil (142) aufweist, das dafür eingerichtet ist, dass es unabhängig vom Ventil (116) gezielt einen Lüftungskanal (148) öffnet oder schließt.

6. Dämpfungssupport nach einem der vorhergehenden Ansprüche, wobei die bewegliche Wand (6a; 106a) eine Membran aus einem Elastomer ist.

7. Dämpfungssupport nach einem der vorhergehenden Ansprüche, wobei der Dämpfungssupport ferner eine Ausgleichskammer (B) aufweist, die mit einer Flüssigkeit gefüllt ist und über einen zweiten engen Durchgang (C) mit dem Arbeitsraum (A) in Verbindung steht.

8. Dämpfungssupport nach Anspruch 7, wobei die Ausgleichskammer (B) von dem Arbeitsraum (A) durch eine starre Trennwand (5; 105) getrennt ist, die mit einem Entkoppelungsventil (32; 132) versehen ist, das zwei Seiten aufweist, die mit dem Arbeitsraum (A) beziehungsweise mit der Ausgleichskammer (B) in Verbindung stehen, wobei dieses Entkoppelungsventil dafür eingerichtet ist, mit einem begrenzten Ausschlag zwischen dem Arbeitsraum und der Ausgleichskammer zu schwingen.

9. Dämpfungssupport nach einem der vorhergehenden Ansprüche, wobei der erste enge Durchgang (D) eine Resonanzfrequenz zwischen 20 und 80 Hz aufweist.
